# EUROPEAN PATENT APPLICATION

(11) **EP 3 680 960 A1**
(43) Date of publication of application: **15.07.2020**
(21) Application number: 18853285.7
(22) Date of filing: 05.09.2018
(51) Int. Cl.: H01M 4/13, H01M 2/02

(54) **ELECTRODE AND LITHIUM ION SECONDARY BATTERY**

(30) Priority: 05.09.2017 JP 2017170367
(71) Applicant: Sekisui Chemical Co., Ltd., Osaka-shi, Osaka 530-8565 (JP)
(72) Inventor: KOSEKI Kazunori, Tsukuba-shi Ibaraki 300-4292 (JP)
(74) Representative: Müller-Boré & Partner Patentanwälte PartG mbB
(86) International application number: PCT/JP2018/032866
(87) International publication number: WO 2019/049886

(57) **Abstract**

An electrode 10 including: a current collector 1, an electrode active material layer 2 disposed on at least one surface 1a of the current collector 1, and an insulating particle layer 3 covering the surface 2a of the electrode active material layer, wherein: at least a part of a peripheral portion of the one surface has an exposed portion E free of the electrode active material layer, the insulating particle layer extends outward of the surface 2a of the electrode active material layer and has a contact portion P that is in close contact with a part of the exposed portion, a ratio of thickness H1 of the current collector to minimum thickness H2 of the contact portion, H1 : H2, is 1.5 : 1 to 12 : 1.

## Description

### TECHNICAL FIELD

The present invention relates to an electrode and a lithium ion secondary battery.

Priority is claimed on Japanese Patent Application No. 2017-170367, filed September 5, 2017, the contents of which are incorporated herein by reference.

### BACKGROUND ART

A lithium ion secondary battery has characteristic high energy density and electromotive power as compared to a lead storage battery or a nickel-hydrogen battery. Therefore, a lithium ion secondary battery is used in power supplies for various devices which are demanded to be smaller in size and lighter in weight, such as mobile phones and laptop computers. Current mainstream lithium ion secondary batteries have an electrolytic solution containing a lithium salt and an organic solvent.

As for the method for manufacturing a lithium ion secondary battery, for example, a lithium ion secondary battery is manufactured by a method in which a laminate of a positive electrode having a positive electrode active material layer formed on a positive electrode current collector, a negative electrode having a negative electrode active material layer formed on a negative electrode current collector, and a separator is housed in an outer package, into which an electrolytic solution is filled, and then the outer package is sealed.

Lithium ion secondary batteries having an insulating particle layer formed on the surface of an electrode are known. For example, Patent Document 1 discloses, in its working examples, a lithium ion secondary battery in which a 2 µm-thick insulating particle layer is provided on the surface of a positive electrode. The insulating particle layer is formed by a method in which an aqueous slurry containing inorganic particles, a polycarboxylate, and a styrene-butadiene rubber is applied on the surface of the positive electrode, and water as a solvent is removed by drying.

The insulating particle layer on the surface of the positive electrode functions as a filter for trapping decomposition products of the electrolyte generated by the reaction at the positive electrode, and suppresses structural deterioration of the positive electrode active material layer accompanying the charge/discharge cycle.

Further, the insulating particle layer on the negative electrode surface suppresses the deposition of components eluted from the positive electrode active material layer on the surface of the negative electrode active material layer, and suppresses the generation of lithium dendrite that causes a short circuit between the positive electrode and the negative electrode.

In addition, the insulating particle layer formed on the positive electrode or the negative electrode may exhibit a function of preventing a short circuit due to contact between the positive electrode and the negative electrode, that is, a function as an auxiliary separator.

Further, although Patent Document 2 describes an adhesive portion of an insulating layer formed of a thermoplastic resin, which is provided on a current collector, and discloses that the ratio between the thickness of the current collector and the thickness of the insulating layer, H1 : H2, is 1.5 : 1 to 12: 1, Patent Document 2 has no disclosure about using an insulating particle layer.

### Prior Art References

### Patent Document

Patent Document 1: Japanese Patent Granted Publication No. 5213534
Patent Document 2: Japanese Unexamined Patent Application Publication No. 2016-219255

### DISCLOSURE OF INVENTION

### Problems to be Solved by the Invention

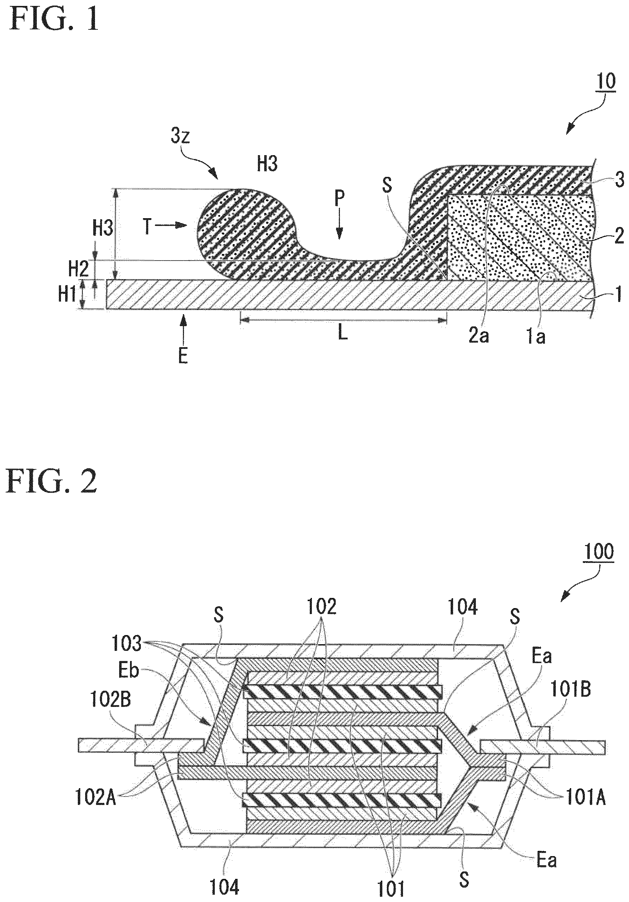

As illustrated in FIG. 2, a general-purpose lithium ion secondary battery 100 is a laminated lithium ion battery in which a stacked cell in which a plurality of positive electrodes 101 and negative electrodes 102 are stacked is sealed in an outer package 4 such as an aluminum laminate film.

In the stacked cell, the positive electrode current collector 101A of the positive electrode 101 and the negative electrode current collector 102A of the negative electrode 102 have, at parts of respective peripheries (edges) thereof, an exposed portion Ea free of a positive electrode active material layer and an exposed portion Eb free of a negative electrode active material layer. As shown in FIG. 2, multiple exposed portions Ea and multiple exposed portions Eb are combined at each side end of the stacked cell, and are connected to the lead wires 101B and 102B extending to the outside of the outer package 4.

The aforementioned exposed portions Ea, Eb of the current collectors can be structurally bent with ease at the boundary edges S thereof (that is, at the edge of the electrode active material layer laminated on the current collector). Therefore, when stress is applied during assembly process of the stacked cell or when using the secondary battery 100, the current collectors 101A, 101B may be broken at the boundary edges S of their exposed portions. Therefore, it is desirable that the exposed portions Ea, Eb of the current collectors are strong and flexible.

Addressing the problem that the conventional polyolefin-based insulating film plasticizes by heating, resulting in reduction in strength and insufficient suppression of the breakage of the current collector, the present invention has been made based on a finding that a specific structural configuration of an insulating particle layer that suffers less decrease in strength by heating but is supposed to have insufficient strength can impart strength and flexibility to the current collector.

That is, an object of the present invention is to provide an electrode that suppresses breakage of a current collector, and a lithium ion secondary battery including the electrode.

### Means to Solve the Problems

[1] An electrode including: a current collector, an electrode active material layer disposed on at least one surface of the current collector, and an insulating particle layer covering the surface of the electrode active material layer, wherein: at least a part of a peripheral portion of the one surface has an exposed portion free of the electrode active material layer, the insulating particle layer extends outward of the surface of the electrode active material layer and has a contact portion that is in close contact with a part of the exposed portion, a ratio of thickness H1 of the current collector to minimum thickness H2 of the contact portion, H1 : H2, is 1.5 : 1 to 12 : 1.
[2] The electrode according to [1], wherein the minimum thickness H2 of the contact portion is 1 µm or more and 8 µm or less.
[3] The electrode according to [1] or [2], wherein the contact portion has a thick portion thicker than the electrode active material layer on a tip side in a direction away from the electrode active material layer.
[4] The electrode according to [3], wherein a maximum thickness H3 of the thick portion is 2 µm or more and 200 µm or less.
[5] The electrode according to any one of [1] to [4], wherein the thickness H1 of the current collector is 1 µm or more and 30 µm or less.
[6] A lithium ion secondary battery including the electrode according to any one of [1] to [5], a counter electrode paired with the electrode, and an electrolyte containing lithium ions.
[7] The lithium ion secondary battery according to [6], which includes two or more of each of the electrode and the counter electrode, wherein a laminate in which the electrodes and the counter electrodes are alternately stacked, and the electrolyte are sealed in a resin film package.

### Effects of Invention

Since the insulating particle layer in the electrode of the present invention reinforces the exposed portion of the current collector, the current collector is not easily broken even when stress is applied to the current collector. Thus, the electrode of the present invention has excellent toughness.

The lithium ion secondary battery of the present invention is improved in terms of the toughness of the current collector, and therefore is unlikely to be damaged even when stress is applied due to bending or impact during use.

### BRIEF DESCRIPTION OF THE DRAWINGS

FIG. 1 is a schematic cross-sectional view showing an enlargement of a peripheral portion of a first embodiment of the electrode of the present invention.
FIG. 2 is a schematic cross-sectional view showing stacked electrodes in a lithium ion secondary battery and bending of current collectors.

### DESCRIPTION OF THE EMBODIMENTS

### 〈〈Electrode〉〉

FIG. 1 is a schematic cross-sectional view showing an enlargement of a peripheral portion of a first embodiment of the electrode 10 of the present invention. The electrode 10 includes a current collector 1, an electrode active material layer 2 provided on at least one surface 1a of the current collector 1, and an insulating particle layer 3 covering the surface 2a of the electrode active material layer 2. The electrode active material layer 2 and the insulating particle layer 3 having a contact portion P described later may be provided only on one surface of the current collector 1 or may be provided on both surfaces of the current collector 1.

The electrode 10 has a laminated portion in which the current collector 1, the electrode active material layer 2, and the insulating particle layer 3 are laminated in this order. The current collector 1 has a peripheral portion extending outward from the laminated portion. The peripheral portion has an exposed portion E where the electrode active material layer 2 is not laminated.

### [Positive electrode current collector, Positive electrode active material]

When the electrode 10 is a positive electrode, any known positive electrode material for secondary batteries can be used. Examples of the positive electrode material are listed below.

Examples of the positive electrode current collector include foils of metals such as aluminum, stainless steel, nickel, titanium, and alloys thereof.

The thickness of the positive electrode current collector is, for example, 5 to 50 µm. The planar size of the positive electrode current collector is, for example, 100 to 10,000 cm².

Examples of the positive electrode active material layer include those obtainable by applying a positive electrode slurry in which a positive electrode active material, a conductive agent, and a binder are dispersed in a solvent to the surface of a positive electrode current collector, and drying the slurry.

The thickness of the positive electrode active material layer is, for example, 1 to 1000 µm.

Examples of the positive electrode active material include lithium iron olivine, lithium cobaltate, lithium nickelate, lithium manganate, lithium iron phosphate and the like.

Examples of the conductive agent include acetylene black and carbon nanotube.

Examples of the binder include a fluororesin such as polyvinylidene fluoride.

### [Negative electrode current collector, Negative electrode active material]

When the electrode 10 is a negative electrode, any known negative electrode material for secondary batteries can be used. Examples of the negative electrode material are listed below.

Examples of the negative electrode current collector include foils of metals such as copper, stainless steel, nickel, titanium, and alloys thereof.

The thickness of the negative electrode current collector is, for example, 5 to 50 µm. The planar size of the negative electrode current collector is, for example, 100 to 10,000 cm².

Examples of the negative electrode active material layer include those obtainable applying a negative electrode slurry in which a negative electrode active material, a binder and, if necessary, a conductive agent are dispersed in a solvent to the surface of a negative electrode current collector, and drying the slurry.

The thickness of the negative electrode active material layer is, for example, 1 to 1000 µm.

Examples of the negative electrode active material include metal lithium, a lithium alloy, a carbonaceous material (carbon powder, graphite powder, and the like) capable of occluding and releasing lithium ions, and a metal oxide.

Examples of the conductive agent include acetylene black and carbon nanotube.

Examples of the binder include a fluororesin such as polyvinylidene fluoride, styrene-butadiene rubber, and the like.

### [Insulating particle layer]

The configuration of the insulating particle layer 3 of the electrode 10 may be the same regardless of whether the electrode active material layer 2 on which the insulating particle layer 3 is formed is a positive electrode active material layer or a negative electrode active material layer.

The insulating particle layer 3 includes particles that do not occlude and release lithium ions, and a binder that binds the particles and imparts adhesiveness with respect to the electrode active material layer 2 and the current collector 1.

In general, the insulating particle layer 3 of the electrode 10 incorporated in the secondary battery is in contact with the electrolytic solution. When the electrolytic solution permeates the insulating particle layer 3, gaps are formed between the binder and the particles. Since lithium ions and the like pass through the insulating particle layer 3 through the gaps, the insulating particle layer 3 shows ion conductivity. That is, the insulating particle layer 3 at the time of use is a porous layer.

### (Particles)

The particles are preferably insulating particles that do not occlude and release lithium ions. Here, the phrase "occlude and release lithium ions" means that in a lithium ion secondary battery provided with the electrode 10, lithium ions are occluded or released to such an extent as to interfere with the charge/discharge processes.

Examples of the particles include inorganic particles and organic particles. For increasing the mechanical strength of the insulating particle layer 3 and reducing the cell resistance, the particles preferably include inorganic particles.

The type of particles included in the insulating particle layer 3 may be of one type, or of two or more types.

Examples of the inorganic particles include inorganic oxide particles such as magnesium oxide particles, titanium oxide particles, aluminum oxide particles, and aluminum hydroxide particles, and barium sulfate particles.

Examples of the organic substance constituting the organic particles include polymeric organic compounds such as urea resin, polyα-olefin, polyacrylic acid, polyacrylate, polymethacrylic acid, polymethacrylate, polymethyl methacrylate, polysilicone (polymethylsilyl sesquioxane, etc.), polystyrene, polydivinylbenzene, styrene-divinylbenzene copolymer, polyimide, melamine resin, phenolic resin, benzoguanamine-formaldehyde condensate, polysulfone, polyacrylonitrile, aramid, polyacetal, and thermoplastic polyimide.

The average particle diameter of the particles is preferably 0.01 µm or more and 2.0 µm or less, more preferably 0.05 µm or more and 1.5 µm or less, and more preferably 0.1 µm or more and 1.0 µm or less, from the viewpoint of suppressing an increase in internal resistance of the battery.

The "average particle diameter" of the particles is a number average particle diameter based on the number of particles. The average particle diameter of the particles is determined by randomly selecting 50 particles to be measured, observing the selected particles with an electron microscope or an optical microscope, measuring the major axes (the longest diameters) of the particles, and obtaining an average value of the major axes. Alternatively, the average particle diameter may be simply determined by a laser diffraction type particle size distribution analyzer.

The amount of the particles relative to the total mass (100 % by mass) of the insulating particle layer 3 is preferably 60 to 99 % by mass, and more preferably 80 to 95 % by mass.

When the amount is not less than the lower limit of the above range, the ionic conductivity increases, and the increase in cell resistance is suppressed. When the amount is not more than the upper limit of the above range, the adhesion of the insulating particle layer 3 to the electrode active material layer 2 is further improved.

### (Binder)

The binder contained in the insulating particle layer 3 is a polymer that binds the particles together and makes the insulating particle layer 3 adhesive to the electrode active material layer 2 and the exposed portion E of the current collector 1.

Examples of the binder include polyacrylic acid (PAA), lithium polyacrylate (PAALi), polyvinylidene fluoride (PVDF), polyvinylidene fluoride-propylene hexafluoride copolymer (PVDF-HFP), styrene-butadiene rubber (SBR), polyvinyl alcohol (PVA), polyethylene oxide (PEO), polyethylene glycol (PEG), acrylic resins such as polyacrylonitrile (PAN), polyimide (PI), carboxymethyl cellulose (CMC), and the like.

The type of binder included in the insulating particle layer 3 may be of one type, or of two or more types.

The weight average molecular weight of the polymer forming the binder is preferably 10,000 or more, and more preferably 20,000 or more. Further, the weight average molecular weight is preferably 1,000,000 or less, and more preferably 500,000 or less. When the weight average molecular weight of the polymer forming the binder is in the above range, the strength of the electrode and the dispersibility of the particles can be easily improved. The molecular weight of the polymer is a weight average molecular weight measured by GPC (gel permeation chromatography).

The glass transition temperature of the binder is preferably -75 °C or higher, more preferably -55 °C or higher, and particularly preferably -35 ° C or higher. Further, the glass transition temperature is usually 40 °C or lower, preferably 30 °C or lower, more preferably 20 °C or lower, and particularly preferably 15 °C or lower. The glass transition temperature of the binder within the above range is favorable for achieving highly balanced characteristics in respect of flexibility and easy winding of the electrode, strong binding of the insulating particle layer 3 to the electrode active material layer 2 and the current collector 1, etc. The glass transition temperature of the binder can be adjusted by the combination of various monomers.

The amount of the binder relative to the total volume of the solids in the insulating particle layer 3 is preferably 5 to 50 % by volume, and more preferably 8 to 40 % by volume.

When the amount is not less than the lower limit described above, sufficient adhesion of the insulating particle layer 3 to the electrode active material layer 2 and the exposed portion E of the current collector 1 can be achieved.

When the amount is not more than the upper limit described above, the amount of the particles is increased in a relative sense, and the ionic conductivity is improved, whereby the increase in the cell resistance can be suppressed.

The total volume of the solids in the insulating particle layer 3 is determined by measuring the specific gravity of each material and the total weight of the solids. The total weight of solids can be determined by weight loss on heating. The amount of the binder contained in the total volume can be determined by a differential thermal balance-mass spectrometry or the like.

The insulating particle layer 3 may contain other components in addition to the particles and the binder as long as the effects of the present invention are not impaired.

The total amount of the other components in the insulating particle layer 3 is preferably 0 to 5 % by mass, and more preferably 0 to 3 % by mass, relative to the total mass (100 % by mass) of the insulating particle layer 3.

The porosity of the insulating particle layer 3 is preferably 20 to 90 % by volume, more preferably 35 to 85 % by volume, and even more preferably 50 to 80 % by volume. When the porosity is not less than the lower limit described above, sufficient interconnection between cells can be achieved, and excellent ion permeability can be imparted to the resulting layer. On the other hand, when the porosity is not more than the upper limit described above, the strength of the insulating particle layer 3 can be sufficiently maintained, which is also preferable from the viewpoint of handling. The porosity can be measured by a known method such as a gas adsorption method or a mercury porosimetery method.

### [Structure of exposed portion of current collector]

As shown in FIG. 1, at least a part of a peripheral portion of the one surface 1a of the current collector 1 has an exposed portion E free of the electrode active material layer 2.

The end 3z of the insulating particle layer 3 continues (extends) from the surface 2a of the electrode active material layer 2 and forms a contact portion P that is in close contact with a part of the exposed portion E. That is, the insulating particle layer 3 extends outward of the electrode active material layer 2 to form a contact portion P that is in close contact with the exposed portion E. The ratio between the thickness H1 of the current collector 1 and the minimum thickness H2 of the contact portion P, H1 : H2, is 1.5 : 1 to 12: 1. Here, being "in close contact with a part of" means that, as shown in FIG. 1, the insulating particle layer 3 is not attached to at least at the point where the current collectors of the negative electrode or the current collectors of the positive electrode are joined together.

When the ratio H1 : H2 is in the above-described range, the contact portion P of the insulating particle layer 3 can sufficiently reinforce the exposed portion E. That is, when H1 : H2 = 1.5 : 1 or more (i.e., the ratio H1/H2 is 1.5 or more), the exposed portion E is allowed to have an appropriate flexibility, while when H1 : H2 = 12 : 1 or less (i.e., the ratio H1/H2 is 12 or less), the exposed portion E is allowed to have a sufficient rigidity. As a result, when stress is applied to the exposed portion E, the electrode current collector 1 can be prevented from breaking at the boundary edge S of the exposed portion E.

For enhancing the above effects, H1 : H2 is preferably 2 to 10, more preferably 2.5 : 1 to 8 : 1, more preferably 3 : 1 to 5.5 : 1, and even more preferably 3.5 : 1 to 5.4 : 1.

The thickness H1 of the electrode current collector 1 is, for example, preferably 1 µm to 100 µm, more preferably 2 µm to 96 µm, further preferably 5 µm to 50 µm, and particularly preferably 10 µm to 30 µm.

When the thickness is not less than the lower limit of the above range, rigidity can be imparted to the exposed portion E. When the thickness is not more than the upper limit of the above range, flexibility can be imparted to the exposed portion E and the thickness of the electrode 10 can be reduced.

Particularly, the present invention has an advantage that even when the electrode current collector 1 is thin with the thickness H1 of about 1 µm to 30 µm, the electrode current collector can be prevented from being broken even when stress is applied to the electrode current collector.

The thickness H1 of the electrode current collector 1 is an average of thickness values measured at 10 points in the exposed portion E and surrounding area with respect to the cross sections of the electrode 10 in the thickness direction (stacking direction) observed with an optical microscope or an electron microscope.

The minimum thickness H2 of the contact portion P is, for example, preferably 1 µm or more and 100 µm or less, more preferably 2 µm or more and 50 µm or less, and still more preferably 3 µm or more and 10 µm or less.

When the thickness is not less than the lower limit of the above range, rigidity can be imparted to the exposed portion E. When the thickness is not more than the upper limit of the above range, flexibility can be imparted to the exposed portion E and the thickness of the electrode 10 can be reduced.

The minimum thickness H2 of the contact portion P is a thickness measured at the thinnest portion of the insulating layer 3 at the contact portion P, which is determined by observing an area including the contact portion P of the electrode 10 with respect to the cross sections of the electrode 10 in the thickness direction observed with an optical microscope or an electron microscope.

The contact portion P has a thick portion T on its tip end side in the direction away from the electrode active material layer 2, which is thicker than the electrode active material layer 2 side (that is, the boundary edge S side). In the contact portion P, the thick portion T is located at the tip of the contact portion P and is thicker than the portion located on the boundary edge side as viewed from the thick portion T. The maximum thickness H3 of the contact portion P is the maximum thickness H3 of the thick portion T.

In a stacked cell in which a plurality of electrodes including the electrode 10 are stacked, the presence of the thick portion T enables more reliable prevention of short circuit from being caused by the contact of the exposed portion E of the electrode 10 with the exposed portion or the electrode active material layer of another electrode.

Although the thick portion T in the present embodiment is located at the distal end of the contact portion P, the thick portion T does not necessarily have to be located at the distal end, and may be located closer to the boundary edge S than the distal end. In this case, there is a portion thinner than the thick portion T on the tip side as viewed from the thick portion T.

The maximum thickness H3 of the thick portion T is, for example, preferably 2 µm or more and 200 µm or less, more preferably 3 µm or more and 100 µm or less, and still more preferably 4 µm or more and 50 µm or less.

When the thickness is not less than the lower limit of the above range, the above-described effect of preventing short circuit can be easily obtained. When the thickness is not more than the upper limit of the above range, the thickness of the electrode 10 can be reduced.

The maximum thickness H3 of the thick portion T is a thickness measured at the thickest portion of the insulating layer 3 including the thick portion T, which is determined by observing an area including the thick portion T of the electrode 10 with respect to the cross sections of the electrode 10 in the thickness direction observed with an optical microscope or an electron microscope.

The ratio (H3 : H2) of the maximum thickness H3 to the minimum thickness H2 is preferably 30 : 1 to 1.5 : 1, more preferably 20 : 1 to 2 : 1, and even more preferably 10 : 1 to 2.5 : 1.

When the ratio is within the range described above, the thickness of the thick portion T becomes appropriate, and even when stress is applied, the thick portion T is stably maintained at the tip end side of the contact portion P, and the above-described effect of preventing short circuit can be further enhanced.

The length L of the contact portion P as measured from the boundary edge S to the tip end is, for example, preferably 1 mm to 10 cm, more preferably 4 mm to 5 cm, and even more preferably 9 mm to 3 cm.

When the length is not less than the lower limit described above, the effect of preventing the electrode current collector 1 from breaking at the boundary edge S can be further enhanced. When the length is not more than the upper limit described above, a portion that does not contribute to the battery capacity can be reduced, and the size of the battery can be reduced.

### <Effects>

In the electrode 10, the end 3z of the insulating particle layer 3 continues from the surface 2a of the electrode active material layer 2 and forms the contact portion P that is in close contact with a part of the exposed portion E; and the ratio of the thickness H1 of the current collector 1 to the minimum thickness H2 of the contact portion P, H1 : H2, is 1.5 : 1 to 12 : 1. The presence of the contact portion P having a specific thickness and positioned on the exposed portion E allows the exposed portion E to have sufficient flexibility as well as sufficient rigidity. As a result, when stress is applied to the exposed portion E, the electrode current collector 1 can be prevented from breaking at the boundary edge S of the exposed portion E.

### 〈〈Production of electrode〉〉

Next, an example of the method for producing the electrode 10 according to the present invention is given below. The electrode 10 can be produced by applying a slurry for forming the insulating particle layer 3 to the surface 2a of the electrode active material layer 2 located on the current collector 1 and the exposed portion E of the electrode current collector 1, followed by drying to remove the dispersion medium.

The slurry contains the particles, the binder, and, if necessary, a dispersion medium and any other optional components.

The method for applying the slurry is not particularly limited, and for example, a doctor blade method, various coater methods, a printing method, a dispenser method, and the like can be employed.

Next, a first method for forming the thick portion T will be described. In the first method, when the slurry is applied by a coater method, the head (discharge port) is pulled up, at the time of applying the slurry from the boundary edge S side to the tip end side of the contact portion P, to a position where the thick portion T is to be formed, to thereby thicken the slurry there, followed by drying.

Then, a second method for forming the thick portion T will be described. In the second method, first, a relatively flat contact portion P having no thick portion T is formed. Then, the slurry is applied over the coated area of the contact portion P at a position where the thick portion T is to be formed, using a dispenser, a coater, or the like, followed by drying.

The viscosity of the slurry to be applied is preferably 10 to 10000 mPa·s, more preferably 50 to 5000 mPa·s, and even more preferably from 100 to 1000 mPa·s. When the viscosity is within the above range, the thick portion T can be formed more easily.

Here, the viscosity of the slurry is a value measured by a B-type viscometer at 25 °C and 60 rpm.

Examples of a preferable method for preparing the slurry with a viscosity falling within the preferable range described above include a method of adjusting the amounts of the particles, the binder and the dispersion medium contained in the slurry.

The amount of the particles with respect to the total mass of the slurry is preferably 1 to 60 % by mass, more preferably 10 to 50 % by mass, and even more preferably 20 to 40 % by mass.

The amount of the binder with respect to the total mass of the slurry is preferably 1 to 10 % by mass, more preferably 2 to 8 % by mass, and even more preferably 3 to 7 % by mass.

Examples of the dispersion medium contained in the slurry, which is preferable in terms of easily adjusting the viscosity to fall within the preferable range described above, include N-methyl-2-pyrrolidone, water, acetone, N,N-dimethylformamide, N,N-dimethylacetamide, cyclohexanone and the like.

### ((Lithium ion secondary battery))

The lithium ion secondary battery of the present invention includes at least two pair of the aforementioned electrode (first electrode) of the present invention, and a counter electrode (second electrode), and includes a laminate in which the electrodes and the counter electrodes are alternately laminated. Here, the counter electrode (second electrode) means an electrode having a polarity opposite to that of the first electrode. When the first electrode is a positive electrode, the second electrode is a negative electrode, whereas when the first electrode is a negative electrode, the second electrode is a positive electrode. The second electrode may be the electrode of the present invention.

In the lithium ion secondary battery of the present invention, the laminate and the electrolyte containing lithium ions are sealed in an outer package formed of a resin film.

The shape of the lithium ion secondary battery of the present invention is not particularly limited, and the lithium ion secondary battery may be of any known shape. Examples of the shape include a cylindrical shape, a square shape, a coin shape, a laminate (sheet) shape, and the like.

As an example of the lithium ion secondary battery of the present invention, a secondary battery 100 shown in FIG. 2 will be described. In FIG. 2, the insulating particle layer included in each electrode is omitted and not shown.

The secondary battery 100 is a laminate battery which has a rectangular shape in a plan view, and has a laminate in which a plurality of positive electrodes each having a positive electrode active material layer 101 and a plurality of negative electrodes each having a negative electrode active material layer 102 are alternately laminated with a separator 103 interposed therebetween. The outer package 104 is made of a resin film, and has the laminate and an electrolyte (not shown) sealed therewithin.

The method for manufacturing the secondary battery 100 is the same as the conventional method except that the above-described electrode of the present invention is used.

### [Separator]

The separator 103 is an optional part and, hence, the secondary battery 100 may not have the separator 103. When the separator 103 is not provided, the insulating particle layer of each electrode prevents a short circuit between the positive electrode and the negative electrode. When the separator 103 is provided, a short circuit between the positive electrode and the negative electrode can be prevented with higher certainty.

Examples of the material of the separator 103 include a microporous sheet made of an olefin resin (e.g., polyethylene or polypropylene) or a cellulose material, and a cloth made of glass fiber.

The thickness of the separator 103 is not particularly limited, and is, for example, 5 µm to 50 µm from the viewpoint of obtaining sufficient mechanical strength.

It is preferable that the vertical and horizontal sizes of the separator 103 are slightly larger than those of the current collectors 101A and 102A.

### <Electrolyte>

As the electrolyte of the secondary battery 100, any known electrolytes for lithium ion secondary batteries can be used. The electrolyte may be an electrolytic solution which is a mixture of a lithium salt and a non-aqueous solvent, or a solid electrolyte which is a mixture of a lithium salt and a polymer. The solid electrolyte may contain a non-aqueous solvent as a plasticizer.

As the lithium salt, any of those used in known lithium ion secondary batteries can be used. Specific examples of the lithium salt include lithium hexafluorophosphate (LiPF₆), lithium tetrafluoroborate (LiBFF₄), lithium bis(fluorosulfonyl)imide (LiFSI), and lithium bis(trifluoromethanesulfonyl)imide (LiN(SO₂CF₃)₂, LiTFSI) . The lithium salt contained in the electrolyte may be of one type or of two or more types.

Examples of the non-aqueous solvent include carbonates, esters, ethers, lactones, nitriles, amides, sulfones, and the like. Specific examples of the non-aqueous solvent include propylene carbonate, ethylene carbonate, diethyl carbonate, dimethyl carbonate, methyl ethyl carbonate, dimethoxyethane, acetonitrile, propionitrile, tetrahydrofuran, 2-methyltetrahydrofuran, dioxane, nitromethane, N,N-dimethylformamide, dimethyl sulfoxide, sulfolane, γ-butyrolactone and the like. The non-aqueous solvent contained in the electrolyte may be of one type or of two or more types.

### Examples

Hereinbelow, the present invention will be described with reference to Examples which, however, should not be construed as limiting the present invention.

### [Production Example 1]

100 parts by mass of lithium iron olivine as a positive electrode active material, 5 parts by mass of acetylene black as a conductive agent, 5 parts by mass of polyvinylidene fluoride as a binder, and NMP as a solvent were mixed together to obtain a slurry having its solid content adjusted to 45 %. This slurry was applied to an aluminum foil having a thickness of 15 µm, preliminarily dried, and then vacuum dried at 120 °C. The electrode was pressed at 4 kN, and was further punched into an electrode size of 40 mm x 40 mm to form a positive electrode.

100 parts by mass of graphite as a negative electrode active material, 1.5 parts by mass of styrene-butadiene rubber as a binder, 1.5 parts by mass of carboxymethylcellulose Na as a thickener, and water as a solvent were mixed together to obtain a slurry having its solid content adjusted to 50 %. This slurry was applied to a copper foil and vacuum dried at 100 °C. The electrode was pressed at 2 kN, and was further punched into an electrode size of 42 mm x 42 mm to form a negative electrode.

In a solvent in which ethylene carbonate (EC) and diethyl carbonate (DEC) was mixed at a volume ratio, EC : DEC, of 3 : 7, LiPF₆ was dissolved as an electrolyte at a concentration of 1 mol/L, to prepare an electrolytic solution.

### [Example 1]

### (Formation of insulating particle layer)

100 g of alumina particles (product name: AHP200, manufactured by Nippon Light Metal Company, Ltd., average particle diameter 0.4 µm) and 50 g of polymethyl urea (polymethyl urea pigment "Pergopak M6", manufactured by Albemarle) as inorganic particles were dispersed in 1000 g of N-methyl 2-pyrrolidone (hereinafter referred to as NMP) while applying a medium-level shearing force, to thereby obtain a slurry.

500 g of polyvinylidene fluoride (L # 1710, manufactured by Kureha Corporation, 10 % by mass solution, solvent: NMP) was prepared, dissolved in the slurry, and gently stirred with a magnetic stirrer for 10 minutes to obtain a slurry for forming an insulating particle layer. The viscosity of the slurry was 800 mPa · s.

The resulting slurry was applied to the surface of the positive electrode active material layer and the exposed portion of the positive electrode current collector using a bar coater. By drying the coating film formed by applying the slurry, an insulating particle layer was formed on the surface of the positive electrode active material layer and on the exposed portion of the positive electrode current collector. The total volume of the solids contained in the insulating particle layer was 60 % by volume, the amount of the binder was 40 % by volume, and the amount of the particles was 20 % by volume. The voids account for the remainder (40 % by volume) other than the solids of the total volume (100 % by volume) of the insulating particle layer.

A part of the produced positive electrode was cut out as a sample, and a cross section thereof in the thickness direction was observed by SEM.

As a result, as shown in FIG. 1, an insulating particle layer having a thickness of about 5 µm was formed on the surface of the positive electrode active material layer, and a contact portion P was formed on the exposed portion E of the positive electrode current collector, which had a length L of 10 mm as measured from the boundary edge S. The minimum thickness H2 of the contact portion P was about 4 µm. Therefore, (thickness H1 of positive electrode current collector) : (minimum thickness H2 of contact portion P) = 3.8 : 1.

The maximum thickness H3 of the thick portion T formed on the tip side of the contact portion P was about 10 µm.

### (Manufacture of battery)

A porous polyethylene film was used as a separator.

Two negative electrodes obtained in Production Example 1, two positive electrodes having the insulating particle layers formed as described above, and three separators were laminated as shown in FIG. 2.

The ends of the exposed portions Ea of the respective positive electrode current collectors were joined together by ultrasonic fusion, to which a terminal tab 101B projecting to the outside was joined. Similarly, the ends of the exposed portions Eb of the respective negative electrode current collectors were joined together by ultrasonic fusion, to which a terminal tab 102B projecting to the outside was joined.

Next, the laminate was interposed between aluminum laminate films while allowing the terminal tabs to project to the outside, and three sides of the resulting were sealed by lamination. The electrolyte obtained in Production Example 1 was injected into the resulting laminate through one side left without sealing, followed by vacuum sealing to thereby manufacture a laminated secondary battery 100.

### (Evaluation of battery)

After confirming the normal charging/discharging operation of the secondary battery 100 manufactured in Example 1, the secondary battery 100 was disassembled and observed to check the condition around the contact portion P of the insulating particle layer formed on the positive electrode. As a result, a bend mark was left on the current collector 101A; however, neither cracking of the insulating particle layer nor breakage of the positive electrode current collector (current collector foil) occurred.

### <Test for flexibility of positive electrode>

A part of laminated portion was cut out as a sample from a positive electrode produced by laminating the positive electrode active material layer and the insulating particle layer on one side of the aluminum foil as described above, and the resulting was cut in the short side direction so as to obtain a strip-shaped sample having a size of 180 mm × 25 mm (width).

A SUS rod having a diameter of 10 mm was prepared. Holding the both ends of the long side of the strip-shaped sample, the sample was pressed against the SUS rod with the sample being at right angle to the longitudinal direction of the SUS rod, and wound around the SUS rod. The wound strip-shaped sample was spread on a desk, and the change in the condition of the positive electrode was evaluated based on the following criteria. The results are shown in Table 1.

### (Evaluation criteria)

A: No change such as cracking observed in comparison between before and after winding.
B: After winding, exfoliation occurred at an end of the formed insulating particle layer.
C: After winding, one crack occurred, extending at right angle to the winding direction.
D: After winding, two or more cracks occurred, extending at right angle to the winding direction.

### <Test for strength of positive electrode>

The laminate produced in the above (Manufacture of battery) section, in which two negative electrodes, two positive electrodes, and three separators were laminated, was placed in an aluminum laminate bag, and the resulting was sealed by a vacuum packaging machine at 0.1 kPa, a sealing temperature of 150 °C, and a sealing time of 3 seconds.

After sealing, the aluminum laminate bag was opened to observe the vicinities of the exposed portion and the boundary edge of the positive electrode current collector, and the results were evaluated according to the following criteria. The results are shown in Table 1.

### (Evaluation criteria)

A: No bending was found in the observed region.
B: One crack line was found in the observed region.
C: At least two crack lines were found in the observed region.
D: Breakage was found in the observed region.

### [Example 2]

A secondary battery 100 was manufactured and evaluated in the same manner as in Example 1 except that the positive electrode was formed so as for the contact portion P to have a minimum thickness H2 of 2.5 µm, and the thick portion T was not formed. The results are shown in Table 1.

In Example 2, (thickness H1 of positive electrode current collector) : (minimum thickness H2 of contact portion P) = 6 : 1.

### [Example 3]

A secondary battery 100 was manufactured and evaluated in the same manner as in Example 1 except that the positive electrode was formed so as for the contact portion P to have a minimum thickness H2 of 5.5 µm, and the thick portion T was not formed. The results are shown in Table 1.

In Example 3, (thickness H1 of positive electrode current collector) : (minimum thickness H2 of contact portion P) = 2.7 : 1.

### [Example 4]

A secondary battery 100 was manufactured and evaluated in the same manner as in Example 1 except that the positive electrode was formed so as for the contact portion P to have a minimum thickness H2 of 1.5 µm, and the thick portion T was not formed. The results are shown in Table 1.

In Example 3, (thickness H1 of positive electrode current collector) : (minimum thickness H2 of contact portion P) = 10 : 1.

### [Example 5]

A secondary battery 100 was manufactured and evaluated in the same manner as in Example 1 except that the positive electrode was formed so as for the contact portion P to have a minimum thickness H2 of 7.5 µm, and the thick portion T was not formed. The results are shown in Table 1.

In Example 5, (thickness H1 of positive electrode current collector) : (minimum thickness H2 of contact portion P) = 2 : 1.

### [Comparative Example 1]

A secondary battery 100 was manufactured and evaluated in the same manner as in Example 1 except that the positive electrode was formed so as for the contact portion P to have a minimum thickness H2 of 1 µm, and the thick portion T was not formed. The results are shown in Table 1.

In Comparative Example 1, (thickness H1 of positive electrode current collector) : (minimum thickness H2 of contact portion P) = 15 : 1.

### <Evaluation of battery>

In the charging and discharging of the secondary battery 100 manufactured in Comparative Example 1, abnormal heat generation occurred. When the secondary battery was disassembled to observe the surroundings of the contact portion of the insulating particle layer formed on the positive electrode 101, it was found that a part of the insulating particle layer formed on the exposed portion Ea of the positive electrode current collector 101A had been delaminated. In addition, discoloration presumably resulted from a short circuit was found at the portion where the insulating particle layer had been delaminated.

### [Comparative Example 2]

A secondary battery 100 was manufactured and evaluated in the same manner as Example 1 except that the thickness of the aluminum foil used in manufacturing the positive electrode was 9 µm, the minimum thickness H2 of the contact portion P was 9 µm, and the thick portion T was not provided.

In Comparative Example 2, (thickness H1 of positive electrode current collector) : (minimum thickness H2 of contact portion P) = 1 : 1.

### <Evaluations>

The secondary battery 100 manufactured in Comparative Example 2 could not be charged and discharged. When the secondary battery was disassembled to observe the surroundings of the contact portion of the insulating particle layer formed on the positive electrode, it was found that the positive electrode current collector 101A was completely broken at the boundary edge S of the contact portion P. This breakage is considered to have occurred during vacuum sealing.

**[Table 1]**

| | Ex.1 | Ex.2 | Ex.3 | Ex.4 | Ex.5 | Com. Ex.1 | Comp. Ex.2 |
|---|---|---|---|---|---|---|---|
| Minimum thickness H2 of contact portion P | 4.0 | 2.5 | 5.5 | 1.5 | 7.5 | 1 | 9 |
| (thickness H1 of positive electrode current collector) : (minimum thickness H2 of contact portion P) | 3.8 : 1 | 6:1 | 2.7 : 1 | 10: 1 | 2:1 | 15 : 1 | 1 : 1 |
| Flexibility | A | B | A | C | A | D | A |
| Strength | A | A | B | A | C | A | D |

### DESCRIPTION OF THE REFERENCE SIGNS

- 1: Current collector
- 2: Electrode active material layer
- 3: Insulating particle layer
- 10: Electrode
- E: Exposed portion
- P: Contact portion
- S: Boundary edge
- T: Thick portion
- H1: Thickness of current collector
- H2: Minimum thickness of contact portion
- H3: Thickness of thick portion
- 100: Secondary battery
- 101: Cathode active material layer
- 101A: Cathode current collector
- 102: Anode active material layer
- 102A: Anode current collector
- 103: Separator
- 104: Outer package
- Ea,Eb: Exposed portion of current collector

## Claims

1. An electrode comprising:
a current collector;
an electrode active material layer disposed on at least one surface of the current collector; and
an insulating particle layer covering the surface of the electrode active material layer,
wherein:
at least a part of a peripheral portion of the one surface has an exposed portion free of the electrode active material layer,
the insulating particle layer extends outward of the electrode active material layer and has a contact portion that is in close contact with a part of the exposed portion, and
a ratio of thickness H1 of the current collector to minimum thickness H2 of the contact portion, H1 : H2, is 1.5 : 1 to 12 : 1.

2. The electrode according to claim 1, wherein the minimum thickness H2 of the contact portion is 1 µm or more and 8 µm or less.

3. The electrode according to claim 1 or 2, wherein the contact portion has a thick portion thicker than the electrode active material layer on a tip side in a direction away from the electrode active material layer.

4. The electrode according to claim 3, wherein a maximum thickness H3 of the thick portion is 2 µm or more and 200 µm or less.

5. The electrode according to any one of claims 1 to 4, wherein the thickness H1 of the current collector is 1 µm or more and 30 µm or less.

6. A lithium ion secondary battery comprising the electrode according to any one of claims 1 to 5, a counter electrode paired with the electrode, and an electrolyte containing lithium ions.

7. The lithium ion secondary battery according to claim 6, which comprises two or more of each of the electrode and the counter electrode, wherein a laminate in which the electrodes and the counter electrodes are alternately stacked, and the electrolyte are sealed in a resin film package.
